# FASCICULE DE BREVET EUROPEEN

(11) **EP 2 493 748 B1**
(45) Date de publication et mention de la délivrance du brevet: **02.03.2016**
(21) Numéro de dépôt: 10787836.5
(22) Date de dépôt: 22.10.2010
(51) Int. Cl.: B62D 25/14

(54) **STRUCTURE DE PLANCHE DE BORD DE VÉHICULE AUTOMOBILE, ET PROCÉDÉ DE FABRICATION ASSOCIÉ**
ARMATURENBRETTSTRUKTUR FÜR EIN MOTORFAHRZEUG UND HERSTELLUNGSVERFAHREN DAFÜR
MOTOR VEHICLE DASHBOARD STRUCTURE, AND RELATED MANUFACTURE METHOD

(30) Priorité: 26.10.2009 FR 0957492
(43) Date de publication de la demande: 05.09.2012
(73) Titulaire: Faurecia Intérieur Industrie, 92000 Nanterre (FR)
(72) Inventeur: BAUDART, Laurent, F-60530 Fresnoy En Thelle (FR); DA COSTA PITO, Sergio, F-95800 Courdimanche (FR)
(74) Mandataire: Domenego, Bertrand
(86) Numéro de dépôt international: PCT/FR2010/052268
(87) Numéro de publication internationale: WO 2011/051607

(56) Documents cités:
- EP-A- 0 479 630
- WO-A-2008/087262
- US-A- 5 238 286
- US-A- 5 564 769

## Description

L'invention concerne en général les planches de bord de véhicule automobile.

Plus précisément, selon un premier aspect, l'invention concerne une structure de planche de bord de véhicule automobile, selon le préambule de la revendication 1.

Une telle structure est connue par exemple de EP 1 529 720.

US 7 407 221 décrit que les extrémités de la traverse sont fixées par l'intermédiaire des étriers aux pieds prolongeant vers le bas les montants de baie du pare-brise.

En cas de choc à l'avant du véhicule, il est connu que les pieds peuvent être soumis à un couple tendant à les faire pivoter autour d'un axe vertical.

WO2008/087262 et EP 0 479 630 décrivent chacun que la structure comprend une équerre renforçant la liaison de la traverse tubulaire à l'étrier.

Dans ce contexte, l'invention vise à proposer une structure de planche de bord permettant de conférer une plus grande rigidité aux éléments de structure du véhicule auxquels sont fixés les étriers, et ce sans augmentation significative de masse ou de coût.

A cette fin, l'invention porte sur une structure de planche de bord selon la revendication 1.

La structure de planche de bord peut également comporter une ou plusieurs des caractéristiques ci-dessous, considérées individuellement ou selon toutes les combinaisons techniquement possibles :
- le contour est fermé, la fixation transversale étant située à l'intérieur du contour ;
- la fixation transversale est située à l'intérieur de l'extrémité de la traverse ;
- la fixation transversale comprend un organe de fixation allongé suivant la direction transversale ;
- l'étrier comprend une seconde plaque sensiblement perpendiculaire à une direction longitudinale, la structure comprenant au moins une fixation longitudinale de la seconde plaque de l'étrier audit élément de structure selon la direction longitudinale ;
- ladite extrémité de la traverse présente une section croissante de manière monotone quand on la parcourt transversalement à partir du tronçon courant ;
- le tronçon courant en projection orthogonale sur la première plaque définit une projection, le contour étant de forme allongée suivant une direction principale passant à la fois par ladite projection et par la fixation transversale ;
- ladite projection occupe une première extrémité du contour, la fixation transversale occupant une seconde extrémité du contour opposée à la première suivant la direction principale ; et
- ladite extrémité de la traverse est plaquée par une tranche contre la première plaque, ladite tranche définissant ledit contour.

Selon un second aspect, l'invention porte une planche de bord de véhicule automobile, comprenant une structure présentant les caractéristiques ci-dessus.

Selon un troisième aspect, l'invention porte sur un véhicule automobile, comprenant un élément de structure et une structure de planche de bord ayant les caractéristiques ci-dessus, la structure de planche de bord comprenant :
- une traverse tubulaire transversale ;
- au moins un étrier de fixation d'une extrémité transversale de la traverse audit élément de structure du véhicule.

Selon un quatrième aspect, l'invention porte sur un procédé de fabrication d'une structure présentant les caractéristiques ci-dessus, caractérisé en ce qu'il comprend les étapes suivantes :
- approvisionner une ébauche tubulaire ;
- former la traverse à partir de l'ébauche tubulaire, en formant l'extrémité de seconde section par déformation d'une extrémité de l'ébauche tubulaire.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue de face, en élévation, d'une structure de planche de bord conforme à l'invention, fixée à des pieds du véhicule représentés en traits mixtes ;
- la figure 2 est une vue de dessus de la structure de la figure 1 ;
- la figure 3 est une vue agrandie, de côté, de la structure des figures 1 et 2 ;
- la figure 4 est une vue en perspective d'une partie de la traverse de la structure de l'invention ;
- la figure 5 est une vue de dessus de la partie de traverse de la figure 4 ;
- la figure 6 est une vue de côté de la partie de traverse des figures 4 et 5 ;
- les figures 7 à 9 sont des représentations schématiques de différentes étapes du procédé de fabrication de la traverse des figures 4 à 6.

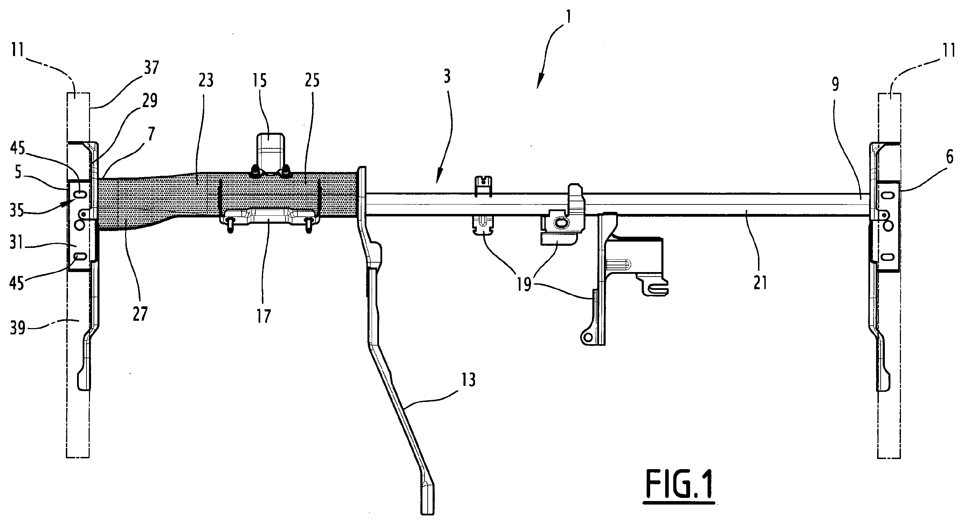

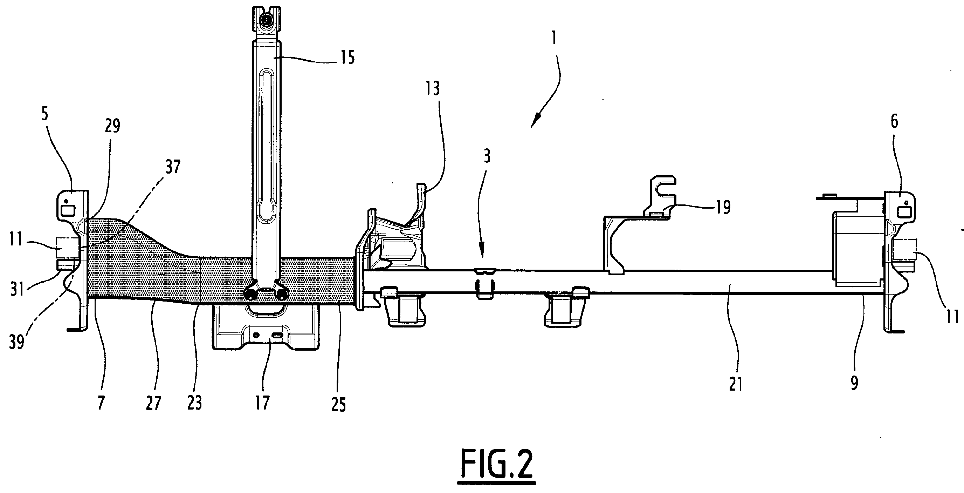

La structure de planche de bord 1 représentée sur les figures 1 et 2 comporte :
- une traverse tubulaire transversale 3 ;
- deux étriers 5, 6 de fixation des deux extrémités transversale 7 et 9 de la traverse à des éléments de structure 11 du véhicule.

Les éléments de structure 11 sont typiquement des pieds prolongeant verticalement vers le bas les montants de baie du pare-brise du véhicule. Ces pieds sont des structures tubulaires, de section par exemple rectangulaire, s'étendant sensiblement verticalement, de part et d'autre de la planche de bord.

Dans la description qui va suivre les directions longitudinale, transversale, la gauche et la droite, l'avant et l'arrière seront entendus relativement au sens de déplacement normal du véhicule.

La planche de bord peut en outre comporter une jambe de force 13, une patte 15 communément appelée liaison TIB et reliant la traverse 3 à la traverse inférieure de baie, une platine 17 de fixation de la colonne de direction du véhicule, ainsi que différentes pattes 19 prévues pour fixer différents éléments de la planche de bord à la traverse 3. Ces éléments sont par exemple la boîte à gant, des conduits de ventilation etc...

La traverse 3 comprend ici deux tronçons, rigidement fixés l'un à l'autre. Le tronçon 21, situé à droite sur la figure 1, présente un diamètre réduit, alors que le tronçon 23, situé à gauche de la figure 1, présente une section plus grande. Le tronçon 23 est placé côté conducteur. Le tronçon 21 prolonge le tronçon 23 transversalement, et est placé côté passager.

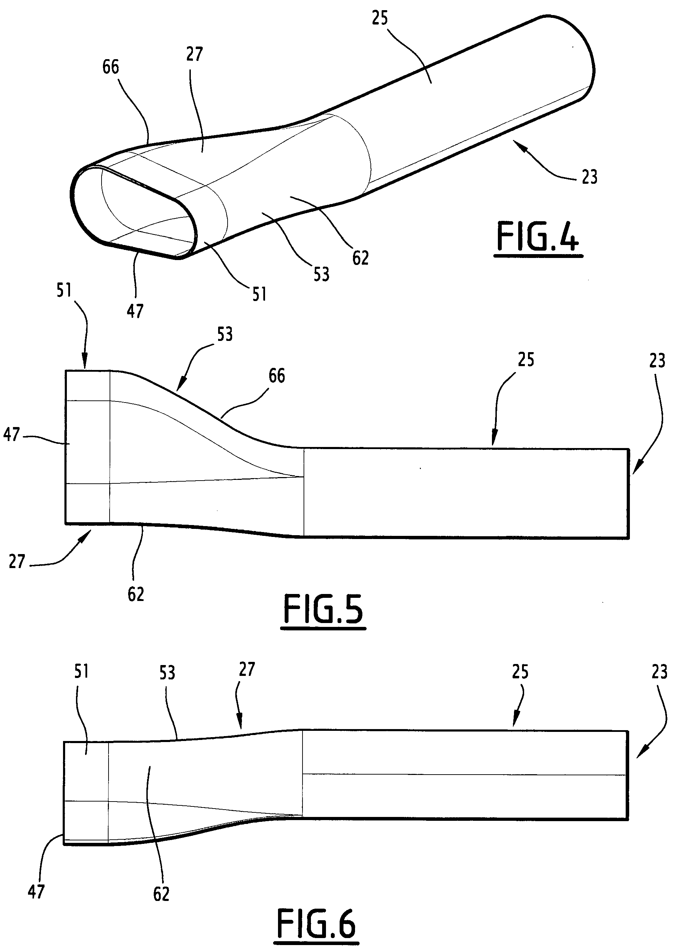

Le tronçon 23 est représenté de manière agrandie sur les figures 4 à 6. Il comporte un tronçon courant 25, sensiblement cylindrique et d'axe transversal, prolongé transversalement par une extrémité 27 de plus grande section que le tronçon courant 25. L'extrémité 27 est venue de matière avec le tronçon courant 25. Il présente une section croissante de manière monotone quand on suit ladite extrémité 27 transversalement à partir du tronçon courant 25. Ceci est visible notamment sur la figure 5.

L'extrémité 27 définit l'extrémité gauche de la traverse. Elle est liée au pied 11 par l'étrier 5, comme on le décrira ci-dessous.

Comme visible sur les figures 1 et 2, l'étrier 5 comporte une première plaque 29 sensiblement perpendiculaire à la direction transversale, et une seconde plaque 31, solidaire de la première, et sensiblement perpendiculaire à la direction longitudinale. La plaque 29 s'étend dans un plan sensiblement longitudinal et vertical. La plaque 31 s'étend dans un plan sensiblement vertical et transversal. Elles sont fixées l'une à l'autre par tout moyen, par exemple par soudage. Elles peuvent également être obtenues par emboutissage d'un flanc métallique ou par toute autre méthode adaptée.

La structure 1 comporte par ailleurs une fixation transversale 33 de la première plaque 29 sur le pied 11, et une fixation longitudinale 35 de la seconde plaque 31 sur le pied 11.

Comme visible sur la figure 2, le pied 11 comporte une face 37 tournée latéralement vers le centre du véhicule, et une face 39 tournée vers l'arrière du véhicule. Les faces 37 et 39 sont respectivement perpendiculaires à la direction transversale et perpendiculaire à la direction longitudinale. La première plaque 29 est rigidement fixée par la fixation transversale 33 à la face 37 du pied. De même, la seconde plaque 31 est rigidement fixée par la fixation longitudinale 35 à la face 39 du pied 11. Ainsi, le pied 11 est logé dans l'angle entre les plaques 29 et 31, les plaques 29 et 31 étant plaquées contre les faces 37 et 39.

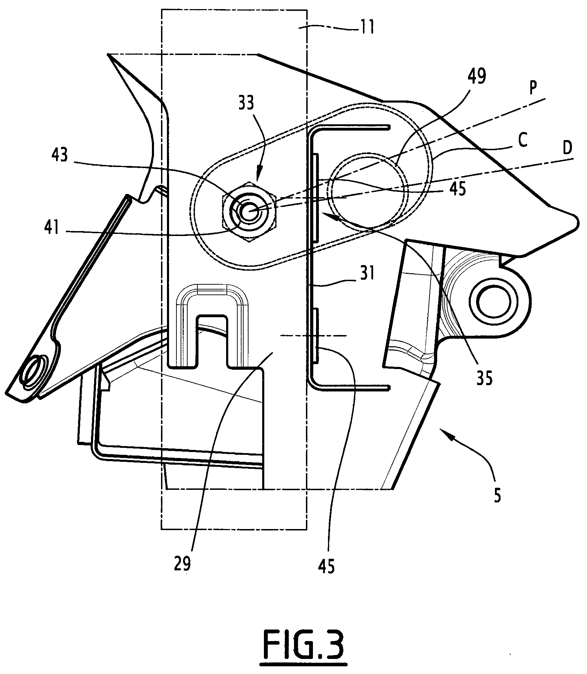

La fixation transversale 33 fixe la première plaque au pied 11 selon la direction transversale. Par exemple, la fixation 33 comporte deux orifices ménagés respectivement dans la plaque 29 et dans la face 37 du pied et placés en coïncidence l'un avec l'autre, un écrou soudé à la plaque 29 et placé en coïncidence avec les orifices, et une vis non représentée engagée à travers les orifices et coopérant avec l'écrou. Sur la figure 3, on voit l'orifice 41 ménagé dans la plaque 29 et l'écrou 43 solidaire de cette plaque. L'écrou 43 est rigidement fixé à une face de la plaque 29 tournée vers l'intérieur du véhicule, c'est-à-dire à l'opposé du pied 11. La vis est d'axe transversal.

La fixation longitudinale 35 est prévue pour fixer la seconde plaque 31 de l'étrier au pied 11 selon la direction longitudinale. Elle comporte par exemple deux points de fixation espacés l'un de l'autre verticalement. Chaque point de fixation comporte par exemple un orifice 45 ménagé dans la plaque 31, un orifice correspondant non représenté ménagé dans la face 39 du pied et placé en coïncidence avec l'orifice 45, et par exemple un boulon engagé dans les orifices et permettant de serrer la plaque 31 et la face 39 l'une contre l'autre.

Comme visible sur les figures 2 et 3, l'extrémité 27 de la traverse est plaquée contre la plaque longitudinale 29. Plus précisément, elle est plaquée contre une face de la plaque 29 opposée au pied 11, c'est-à-dire tournée vers le centre du véhicule. L'extrémité 27 définit ainsi sur la plaque 29 un contour C représenté en traits interrompus sur la figure 3.

Plus précisément, l'extrémité 27 présente une tranche libre 47, plaquée contre la première plaque 29 et définissant le contour C. La tranche libre 47 est fixée à la première plaque 29 par tout moyen adapté, par exemple par soudage.

Le contour C est fermé, la fixation transversale 33 étant située à l'intérieur du contour fermé C. Ainsi, la fixation transversale 33 est logée à l'intérieur de l'extrémité 27 de la traverse 3.

Comme visible sur la figure 3, le tronçon courant 25 de la traverse, considéré en projection orthogonale sur la plaque longitudinale 29, définit une projection 49. La projection 49 est elle aussi située à l'intérieur du contour C. Elle est de préférence située dans sa totalité à l'intérieur du contour C. En variante, elle peut être située à plus de 50% à l'intérieur du contour C, de préférence à plus de 75%, et encore de préférence à plus de 90%.

Le contour C présente une forme allongée suivant une direction principale. La direction principale passe de préférence par la projection 49 et par la fixation transversale 33. La direction principale passe de préférence par le centre de la fixation 33 et par le centre de la projection 49, ou, comme représentée sur la figure 3, est faiblement inclinée par rapport à la direction D passant par le centre de la projection 49 et le centre de la fixation 33.

La fixation 33 est située à l'intérieur du contour C. Plus précisément, la fixation 33 occupe l'une des extrémités du contour C, la projection 49 occupant de préférence l'extrémité opposée du contour C selon la direction principale P. Dans l'exemple représenté sur la figure 3, la projection 49 est située à proximité de ladite extrémité opposée à la fixation 33.

Comme visible sur les figures 4 à 6, l'extrémité 27 comporte une partie d'extrémité 51 de section constante, et une partie intermédiaire 53 raccordant la partie d'extrémité 51 au tronçon courant 25. La partie intermédiaire 53 présente une section qui va en s'accroissant du tronçon 25 jusqu'à la partie d'extrémité 51.

Par exemple, le tronçon 21 de la traverse présente un diamètre d'environ 40 mm. Le tronçon courant 25 présente un diamètre constant sur toute sa longueur transversale, d'environ 70 mm. La partie d'extrémité 51 présente, suivant la direction principale, une longueur d'environ 100 mm, et présente perpendiculairement à la direction principale une largeur de l'ordre de 70 mm. La partie intermédiaire 53 présente, suivant la direction transversale, une longueur d'environ 100 mm.

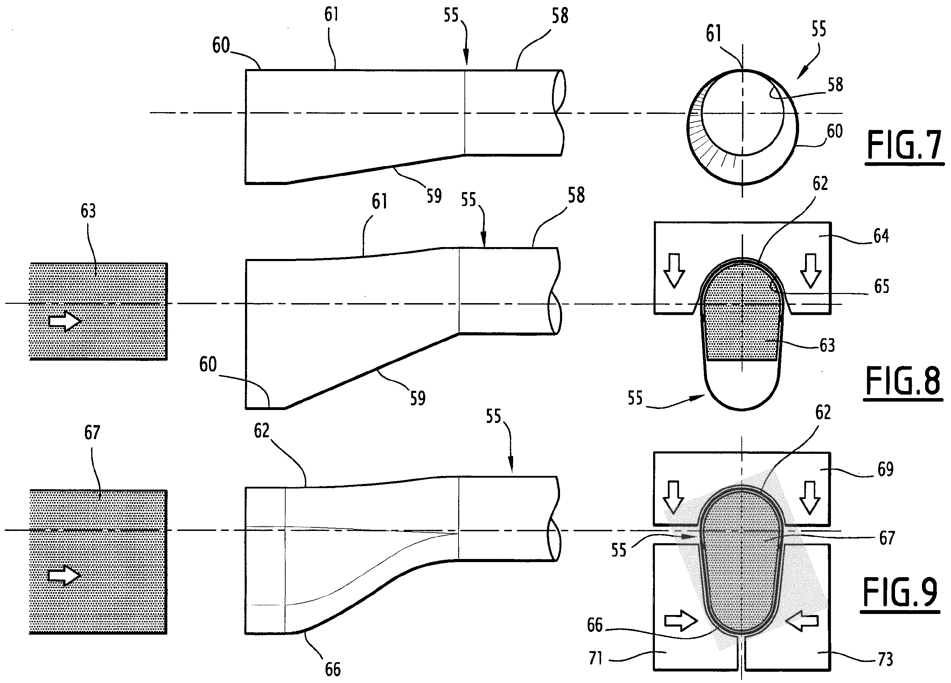

Comme représenté sur les figures 7 à 9, la traverse 1 est obtenue par déformation d'une ébauche tubulaire.

Plus précisément, le tronçon 23 de la traverse est obtenue par déformation d'une ébauche tubulaire. Le procédé de fabrication comprend entre autres les étapes suivantes :
- approvisionner une ébauche tubulaire 55 ;
- former le tronçon 23 de la traverse, à partir de l'ébauche tubulaire, en formant l'extrémité 27 par déformation de l'ébauche tubulaire 55.

L'ébauche tubulaire 55 présente au départ, comme visible sur la figure 7, un tronçon central 58 destiné à former le tronçon courant 25, un tronçon intermédiaire 59 destiné à former la partie intermédiaire 53, et un tronçon d'extrémité 60 destiné à former la partie d'extrémité 51

Le tronçon central 58 est cylindrique, de diamètre sensiblement égal au diamètre du tronçon courant 25. Le tronçon d'extrémité 60 est cylindrique, de diamètre supérieur à celui du tronçon central 58. Le tronçon intermédiaire 59 est tronconique.

Les trois tronçons 58, 59, 60 présentent une génératrice 61 commune.

Au cours d'une première étape de mise en forme, on forme la zone 62 de l'extrémité 27 comme illustré sur la figure 8. La zone 62 constitue, selon la direction principale, l'extrémité opposée à la fixation transversale 33. Pour cela, on introduit dans les tronçons 59 et 60 de l'ébauche tubulaire un noyau 63 dont la partie tournée vers la génératrice 61 présente la forme de la zone 62. Puis, on applique à l'extérieur des tronçons 59 et 60 une matrice 64 présentant une concavité 65 de forme complémentaire de celle du noyau 63. La zone de l'ébauche tubulaire prise entre le noyau 63 et la matrice 64 est déformée et prend la forme de la zone 62.

A l'opposé de la zone 62, les tronçons 59 et 60 sont déformés par ovalisation des sections circulaires desdits tronçons 59 et 60.

On effectue ensuite une deuxième opération de mise en forme, destinée à mettre en forme la zone 66 de l'extrémité 27 située du côté de la fixation 33. A cette fin, on introduit dans les tronçons 59 et 60 de l'ébauche tubulaire un autre noyau 67 de forme correspondant exactement au volume interne de l'extrémité 27. Puis on applique à l'extérieur des tronçons 59 et 60 trois matrices 69, 71 et 73. La matrice 69 possède une concavité de forme correspondant sensiblement à celle de la zone 62. Les matrices 71 et 73 présentent des concavités reproduisant sensiblement la forme de la zone 66.

Après cette deuxième étape de mise en forme les tronçons 59 et 60 de l'ébauche tubulaire présente la forme recherchée. Le tronçon 60 est ensuite soudé sur la plaque longitudinale 29 de l'étrier correspondant.

La structure de planche de bord décrite ci-dessus présente de multiples avantages.

La structure de planche de bord décrite ci-dessus présente de multiples avantages.

Ainsi, le fait que l'élément de structure soit fixé à l'étrier selon la direction transversale contribue à bloquer l'élément de structure en rotation en cas de choc. Le fait que l'extrémité de la traverse présente une section élargie et soit venue de matière avec le tronçon courant de la traverse qui jouxte l'extrémité, contribue à accroître l'inertie de ladite extrémité de la traverse, de telle sorte que la traverse peut reprendre les efforts transmis par l'élément de structure en cas de choc. Cette augmentation d'inertie est réalisée sans augmenter de manière excessive la masse de la traverse. Ceci vient notamment du fait que l'extrémité élargie de la traverse est venue de matière avec le tronçon courant de diamètre réduit. Le surcroît d'inertie à l'extrémité de la traverse n'est pas obtenu en ajoutant des pièces supplémentaires, telles que des équerres, qui contribuent à augmenter la masse de la traverse de manière importante.

Par ailleurs, l'assemblage de la traverse aux éléments de structure du véhicule est particulièrement simple du fait qu'il n'est pas nécessaire d'ajouter d'autres pièces telles que des équerres au moment de cet assemblage.

Le blocage en rotation de l'élément de structure est particulièrement efficace du fait que l'extrémité de la traverse est plaquée sur la plaque longitudinale de l'étrier le long d'un contour, la fixation transversale étant située à l'intérieur du contour ou à proximité du contour.

Le blocage est encore plus efficace quand le contour est fermé et que la fixation transversale est située à l'intérieur du contour, ou que la fixation transversale est située de l'extrémité de la traverse.

Le fait que l'extrémité de la traverse présente une section croissante de manière monotone quand on la parcourt transversalement à partir du tronçon courant présente l'avantage qu'il est possible de mettre en forme facilement l'extrémité de la traverse par déformation d'une ébauche tubulaire, en utilisant successivement plusieurs noyaux.

Par ailleurs, le fait que le contour soit de forme allongée confère à la traverse une forme présentant une inertie élevée.

La structure de planche de bord décrite ci-dessus présente de multiples variantes.

Ainsi, une seule des extrémités de la traverse tubulaire peut présenter une section élargie et être plaquée contre une plaque de l'étrier de manière à entourer ou passer à proximité d'une fixation transversale d'un élément de structure du véhicule. Dans l'exemple de réalisation des figures 1 à 6, l'extrémité élargie est située côté conducteur. Elle pourrait être située côté passager. Alternativement, les deux extrémités de la traverse pourrait être élargies et plaquée contre une plaque de l'étrier correspondant suivant un contour déterminé, de telle sorte que la fixation transversale de l'étrier soit à l'intérieur du contour ou à proximité du contour.

Avantageusement, l'extrémité 27 peut présenter une épaisseur de paroi plus grande que le tronçon courant 25. Par exemple, la partie d'extrémité 51 de la traverse peut présenter une épaisseur de paroi plus grande que le tronçon courant 25 et que la partie intermédiaire 53.

La partie d'extrémité 51 présente par exemple une épaisseur de paroi de 2 mm et le tronçon courant 1.2 mm.

Dans ce cas, le tronçon 23 de la traverse est formé à partir d'une ébauche tubulaire 55 dont le tronçon d'extrémité 60 présente une épaisseur de paroi plus grande que le tronçon central 58 et le tronçon intermédiaire 59.

L'orientation de la plaque de l'étrier fixée par la fixation transversale à l'élément de structure du véhicule n'est pas nécessairement longitudinale. La plaque peut être légèrement inclinée par rapport à la direction longitudinale. Il est possible que la plaque présente un décrochement, une partie de ladite plaque étant décalée transversalement par rapport à l'autre.

Il est possible que seule une partie de la tranche de l'extrémité de la traverse soit en appui sur la plaque longitudinale de l'étrier. Dans ce cas, le contour selon lequel la traverse est plaquée contre la plaque longitudinale de l'étrier est ouvert.

L'extrémité de la traverse ne présente pas nécessairement la forme représentée sur les figures 4 à 6. Elle peut présenter toutes sortes de formes, et notamment une forme irrégulière si nécessaire pour permettre l'implantation d'autres équipements de la planche de bord.

Dans une variante non préférée de l'invention, la structure de planche de bord peut ne pas comporter de fixation longitudinale pour l'étrier.

Le tronçon courant de la traverse peut présenter toutes sortes de forme, de section, de profil le long de la direction transversale et de longueur. Le tronçon courant n'est pas nécessairement rectiligne, ni de section circulaire.

L'extrémité de la traverse n'est pas nécessairement en appui sur la plaque longitudinale de l'étrier par sa tranche. Il peut par exemple comporter un bord dressé et être en appui sur la plaque longitudinale par l'intermédiaire du bord dressé.

La structure de planche de bord peut présenter une, ou deux, ou plus de deux fixations longitudinales à l'élément de structure du véhicule.

Les fixations longitudinales et transversales peuvent être de tout type. Elles peuvent comporter des boulons, des tirants etc...

Comme indiqué ci-dessus, la fixation transversale est à l'intérieur du contour le long duquel la traverse est plaquée sur la plaque longitudinale de l'étrier, et éventuellement est située à proximité du contour. On entend par « à proximité » le fait que la fixation transversale soit à quelques centimètres au plus du contour, par exemple à moins de 5 centimètres de préférence à moins de 2 centimètres. Cet écart correspond à la distance entre le bord extérieur de la fixation et le contour, par exemple la tranche de l'extrémité de la traverse.

Ainsi il est possible que la fixation transversale soit située à l'extérieur du contour, mais selon l'invention la fixation transversale est située à l'intérieur de ce contour.

Dans une variante non préférée de l'invention, la fixation transversale peut ne pas être située à une extrémité du contour, mais être décalée par rapport à ladite extrémité suivant la direction principale.

## Revendications

1. Structure de planche de bord de véhicule automobile, la structure (1) comprenant :
- une traverse tubulaire (3) transversale ;
- au moins un étrier (5) de fixation d'une extrémité transversale (27) de la traverse à un élément de structure (11) du véhicule ;
l'étrier (5) comprenant une première plaque (29) sensiblement perpendiculaire à la direction transversale, la structure (1) comprenant une fixation transversale (33) de la première plaque (29) de l'étrier (5) audit élément de structure (11) selon la direction transversale, la traverse (3) comprenant un tronçon courant (25) de première section, ladite extrémité (27) de la traverse (3) étant venue de matière avec le tronçon courant (25) et présentant une seconde section plus grande que la première section, ladite extrémité (27) de la traverse (3) étant plaquée contre la première plaque (29) suivant un contour (C), **caractérisée en ce que** la fixation transversale (33) étant située à l'intérieur du contour (C).

2. Structure suivant la revendication 1, **caractérisée en ce que** le contour (C) est fermé, la fixation transversale (33) étant située à l'intérieur du contour (C).

3. Structure suivant la revendication 1 ou 2, **caractérisée en ce que** la fixation transversale (33) est située à l'intérieur de l'extrémité (27) de la traverse (3).

4. Structure suivant l'une quelconque des revendications 1 à 3, **caractérisée en ce que** la fixation transversale (33) comprend un organe de fixation allongé suivant la direction transversale.

5. Structure suivant l'une quelconque des revendications 1 à 4, **caractérisée en ce que** l'étrier (5) comprend une seconde plaque (31) sensiblement perpendiculaire à une direction longitudinale, la structure (1) comprenant au moins une fixation longitudinale (35) de la seconde plaque (31) de l'étrier (5) audit élément de structure (11) selon la direction longitudinale.

6. Structure suivant l'une quelconque des revendications 1 à 5, **caractérisée en ce que** ladite extrémité (27) de la traverse (3) présente une section croissante de manière monotone quand on la parcourt transversalement à partir du tronçon courant (25).

7. Structure suivant l'une quelconque des revendications 1 à 6, **caractérisée en ce que** le tronçon courant (25) en projection orthogonale sur la première plaque (29) définit une projection (49), le contour (C) étant de forme allongée suivant une direction principale (P) passant à la fois par ladite projection (49) et par la fixation transversale (33).

8. Structure suivant la revendication 7, **caractérisée en ce que** ladite projection (49) occupe une première extrémité du contour (C), la fixation transversale (33) occupant une seconde extrémité du contour (C) opposée à la première suivant la direction principale (P).

9. Structure suivant l'une quelconque des revendications 1 à 8, **caractérisée en ce que** ladite extrémité (27) de la traverse (8) est plaquée par une tranche (47) contre la première plaque (29), ladite tranche (47) définissant ledit contour (C).

10. Structure suivant l'une quelconque des revendications 1 à 9, **caractérisée en ce que** l'extrémité transversale (27) de la traverse (3) présente une épaisseur de paroi plus grande que le tronçon courant (25).

11. Planche de bord de véhicule automobile, comprenant une structure (1) selon l'une quelconque des revendications précédentes.

12. Véhicule automobile, comprenant un élément de structure (11), et une structure (1) de planche de bord selon l'une quelconque des revendications 1 à 10, la structure de planche de bord (1) comprenant :
- une traverse tubulaire transversale (3) ;
- au moins un étrier (5) de fixation d'une extrémité transversale (27) de la traverse (3) audit élément de structure (11) du véhicule.

13. Procédé de fabrication de la structure de l'une quelconque des revendications 1 à 10, **caractérisé en ce qu'**il comprend les étapes suivantes :
- approvisionner une ébauche tubulaire (55) ;
- former la traverse (3) à partir de l'ébauche tubulaire (55), en formant l'extrémité (27) de seconde section par déformation de l'ébauche tubulaire (55).

## Patentansprüche

1. Instrumententafelaufbau für ein Kraftfahrzeug, wobei der Aufbau (1) umfasst:
- einen rohrförmigen Querträger (3);
- mindestens einen Bügel (5) zur Befestigung eines Querendes (27) der Traverse an einem Strukturelement (11) des Fahrzeugs;
wobei der Bügel (5) eine erste Platte (29) umfasst, die im Wesentlichen senkrecht zur Querrichtung ist, wobei die Struktur (1) eine Querbefestigung (33) der ersten Platte (29) des Bügels (5) an dem Strukturelement (11) gemäß der Querrichtung umfasst, wobei der Träger (3) einen durchgehenden Abschnitt (25) mit erstem Querschnitt umfasst und das Ende (27) des Trägers (3) in einem Stücke mit dem durchgehenden Abschnitt (25) hergestellt ist und einen zweiten, größeren Querschnitt als der erste Querschnitt aufweist, wobei das Ende (27) des Trägers (3) gegen die erste Platte (29) gemäß einer Kontur (C) gepresst ist, **dadurch gekennzeichnet, dass** die Querbefestigung (33) im Inneren der Kontur (C) liegt.

2. Aufbau nach Anspruch 1, **dadurch gekennzeichnet, dass** die Kontur (C) geschlossen ist, wobei die Querbefestigung (33) im Inneren der Kontur (C) liegt.

3. Aufbau nach Anspruch 1 oder 2, **dadurch gekennzeichnet, dass** die Querbefestigung (33) im Inneren des Endes (27) des Trägers (3) liegt.

4. Aufbau nach einem beliebigen der Ansprüche 1 bis 3, **dadurch gekennzeichnet, dass** die Querbefestigung (33) ein gemäß der Querrichtung langgestrecktes Befestigungselement umfasst.

5. Aufbau nach einem beliebigen der Ansprüche 1 bis 4, **dadurch gekennzeichnet, dass** der Bügel (5) eine zweite Platte (31) im Wesentlichen senkrecht zu einer Längsrichtung umfasst, wobei der Aufbau (1) mindestens eine Längsbefestigung (35) der zweiten Platte (31) des Bügels (5) an dem Strukturelement (11) gemäß der Längsrichtung umfasst.

6. Aufbau nach einem beliebigen der Ansprüche 1 bis 5, **dadurch gekennzeichnet, dass** das Ende (27) des Trägers (3) einen monoton steigenden Querschnitt aufweist, wenn man ihn quer von dem durchgehenden Abschnitt (25) an durchläuft.

7. Aufbau nach einem beliebigen der Ansprüche 1 bis 6, **dadurch gekennzeichnet, dass** der durchgehende Abschnitt (25) in orthogonaler Projektion auf die erste Platte (29) eine Projektion (49) definiert, wobei die Kontur (C) von einer langgestreckten Form gemäß einer Hauptrichtung (P) ist, die sowohl durch die Projektion (49) als auch durch die Querbefestigung (33) hindurchgeht.

8. Aufbau nach Anspruch 7, **dadurch gekennzeichnet, dass** die Projektion (49) einen ersten Endbereich der Kontur (C) einnimmt, wobei die Querbefestigung (33) einen zweiten Endbereich der Kontur (C), entgegengesetzt zu dem ersten, gemäß der Hauptrichtung (P) einnimmt.

9. Aufbau nach einem beliebigen der Ansprüche 1 bis 8, **dadurch gekennzeichnet, dass** das Ende (27) des Trägers (8) durch einen Rand (47) gegen die erste Platte (29) gepresst wird, wobei der Rand (47) die Kontur (C) definiert.

10. Aufbau nach einem beliebigen der Ansprüche 1 bis 9, **dadurch gekennzeichnet, dass** das Querende (27) des Trägers (3) eine größere Wanddicke als der durchgehende Abschnitt (25) aufweist.

11. Instrumententafel für ein Kraftfahrzeug, einen Aufbau nach einem beliebigen der vorhergehenden Ansprüche umfassend.

12. Kraftfahrzeug mit einem Strukturelement und einem Instrumententafelaufbau (1) nach einem beliebigen der Ansprüche 1 bis 10, wobei der Instrumententafelaufbau (1) umfasst:
- einen rohrförmigen Querträger (3);
- mindestens einen Bügel (5) zur Befestigung eines Querendes (27) des Trägers (3) an dem Strukturelement (11) des Fahrzeugs.

13. Verfahren zur Herstellung des Aufbaus nach einem beliebigen der Ansprüche 1 bis 10, **dadurch gekennzeichnet, dass** es die folgenden Schritte umfasst:
- Bereitstellen eines rohrförmigen Rohlings (55);
- Bilden des Trägers (3) aus dem rohrförmigen Rohling (55), wobei das Ende (27) mit zweitem Querschnitt durch Verformung des rohrförmigen Rohlings (55) gebildet wird.

## Claims

1. A motor vehicle dashboard structure, said structure (1) comprising:
- a transverse tubular crossmember (3);
- at least one bracket (5) for attaching a transverse end (27) of said crossmember to a structural element (11) of said vehicle;
said bracket (5) comprising a first plate (29) that is substantially perpendicular to the transverse direction, said structure (1) comprising a transverse attachment (33) for attaching said first plate (29) of said bracket (5) to said structural element (11) in the transverse direction, said crossmember (3) comprising a running section (25) with a first cross-section, said end (27) of said crossmember (3) being integrally formed with said running section (25) and having a second cross-section that is larger than said first cross-section, said end (27) of said crossmember (3) being pressed against said first plate (29) following a profile (C), **characterised in that** said transverse attachment (33) is located inside said profile (C).

2. The structure according to claim 1, **characterised in that** said profile (C) is closed, said transverse attachment (33) being located inside said profile (C).

3. The structure according to claim 1 or 2, **characterised in that** said transverse attachment (33) is located inside said end (27) of said crossmember (3).

4. The structure according to any one of claims 1 to 3, **characterised in that** said transverse attachment (33) comprises a fastener that extends in the transverse direction.

5. The structure according to any one of claims 1 to 4, **characterised in that** said bracket (5) comprises a second plate (31) that is substantially perpendicular to a longitudinal direction, said structure (1) comprising at least one longitudinal attachment (35) for attaching said second plate (31) of said bracket (5) to said structural element (11) in the longitudinal direction.

6. The structure according to any one of claims 1 to 5, **characterised in that** said end (27) of said crossmember (3) has a cross-section that uniformly increases when viewed transversely from the running section (25).

7. The structure according to any one of claims 1 to 6, **characterised in that** said running section (25) orthogonally projecting on said first plate (29) defines a projection (49), said profile (C) being of elongated shape in a main direction (P) passing through both said projection (49) and said transverse attachment (33).

8. The structure according to claim 7, **characterised in that** said projection (49) occupies a first end of said profile (C), said transverse attachment (33) occupying a second end of said profile (C) opposite said first end in said main direction (P).

9. The structure according to any one of claims 1 to 8, **characterised in that** said end (27) of said crossmember (8) is pressed against said first plate (29) via an edge (47), said edge (47) defining said profile (C).

10. The structure according to any one of claims 1 to 9, **characterised in that** the wall thickness of said transverse end (27) of said crossmember (3) is greater than said running section (25).

11. A motor vehicle dashboard, comprising a structure (1) according to any one of the preceding claims.

12. A motor vehicle, comprising a structural element (11), and a dashboard structure (1) according to any one of claims 1 to 10, said dashboard structure (1) comprising:
- a transverse tubular crossmember (3);
- at least one bracket (5) for attaching a transverse end (27) of said crossmember (3) to said structural element (11) of said vehicle.

13. A method for manufacturing the structure according to any one of claims 1 to 10, **characterised in that** it comprises the following steps:
- supplying a tubular blank (55);
- forming said crossmember (3) from said tubular blank (55) by forming said end (27) with said second cross-section through the deformation of said tubular blank (55).
